# EUROPEAN PATENT SPECIFICATION

(11) **EP 0 972 437 B1**
(45) Date of publication and mention of the grant of the patent: **03.04.2002**
(21) Application number: 99304983.2
(22) Date of filing: 24.06.1999
(51) Int. Cl.: A01D 34/84, A01D 34/86

(54) **Guide mechanism**
FÜHRUNGSEINRICHTUNG
Mécanisme de guidage

(30) Priority: 11.07.1998 GB 9814997
(43) Date of publication of application: 19.01.2000
(73) Proprietor: Black & Decker Inc., Newark Delaware 19711 (US)
(72) Inventor: Thomas, Roger, Stockton on Tees TS21 3BQ (GB)
(74) Representative: Harries, Simon George

(56) References cited:
- DE-U- 29 712 138
- GB-A- 2 221 373
- US-A- 2 523 439
- US-A- 2 857 725
- US-A- 5 210 998
- US-A- 5 269 125
- US-A- 5 355 664

## Description

The present invention relates to lawn mowers and, in particular, to lawn mowers mounted on castor wheels.

Household lawn mowers comprise a cutting deck upon which is mounted a motor. The motor can be either an electric motor powered by either a mains electricity supply or a battery, or an internal combustion engine. The motor rotatingly drives a cutting blade mounted below the cutting deck about a substantially vertical axis, to cut the grass beneath the deck as the blade rotates. The cutting deck is commonly mounted on wheels or rollers, having a fixed direction of travel so that the lawn mower moves over the lawn in a forward and reverse direction. Typically, where the mower has four wheels, these are located on the deck in a rectangular array.

One method of increasing the manoeuvrability of a mower is to mount the cutting deck of the mower on castor wheels which can freely swivel through 360° instead of wheels or rollers which have a predetermined fixed direction of travel. This allows the cutting deck of the mower to travel in any direction, both linearly and rotationally.

It is desirable to be able to cut the grass at the extreme edges of the lawn. This is achieved by moving the path swept out by the blade when it rotates over the edge of the lawn thereby enabling the blade to cut the grass at the extreme edges as it rotates.

However, in a number of circumstances the wheels of the mower are not able to travel beyond the edge of the lawn, for example, due to the type of terrain beyond the edge of the lawn, due to a large drop in height between the lawn and the terrain beyond the edge of the lawn, or due to a solid object such as a wall being located at the edge of the lawn, and therefore the wheels have to remain on the lawn to maintain the correct operational position of the mower.

It is beneficial to mount the cutting deck of mowers on four wheels as it provides a stable platform on which the motor can be mounted for operation.

In order for such a mower to be able to cut the grass at the extreme edges of a lawn whilst maintaining the wheels on the lawn, the path swept out by the cutting blade must extend sideways beyond the wheels located closest to the edge of the lawn. This results in a cutting deck which forms a protective skirt around the path swept out by the cutting blade when it rotates, and which extends sideways even further than the path. In use, the wheels along one side of such a mower are moved over the lawn in close proximity to the edge of the lawn so that, the path swept out by the blade extends over and beyond the edge, to enable the blade to cut the grass at the extreme edges. Such a mower cannot be easily operated to cut grass located in close proximity to a solid object such as a tree or wall as the edge of the cutting deck is likely to come into contact with and be scratched or damaged by the wall or object.

In other circumstances, it is desirable for the sides of the deck to have a similar width to that of the wheels or to be narrower. For example, in certain circumstances it is desirable that the wheels of a mower do not traverse over the surface which has just been cut by the mower as it moves along. However, such a mower is unable to cut the extreme edge of a lawn whilst maintaining its wheels on the lawn.

US 5,355,664 discloses a mower which comprises a traction vehicle having a cutting deck mounted on the front of the traction vehicle. The cutting deck has four castor wheel assemblies and is capable of being pivoted between a raised position where the deck is located away from the ground and a lower position where the castor wheels engage with the ground to support the deck. The direction of travel of the deck, and hence castor wheel assemblies, across the ground is totally dependent on the direction of travel of the traction vehicle. The traction vehicle is only capable of travelling in a forward and reverse direction or in a turning motion. The orientation of the deck remains fixed in relation to the traction vehicle.

Accordingly, there is provided a lawn mower comprising a cutting deck mounted on four castor wheel assemblies each located in the region of a comer of the cutting deck and wherein two castor wheel assemblies are located towards the front of the cutting deck and the other two are located towards the rear of the cutting deck and either
i) the pair of castor wheel assemblies located towards the front of the cutting deck are located closer together than the pair of castor wheel assemblies located at the rear of the cutting deck; or
ii) the pair of castor wheel assemblies located towards the rear of the cutting deck are located closer together than the pair of castor wheel assemblies located at the front of the cutting deck,
wherein, when the mower is manoeuvred in a forward and reverse direction, a side of the cutting deck does not project sideways from the mower further than both castor wheel assemblies on that side of the mower;
characterised in that, when the cutting deck is moved at an angle to the direction of travel the side of the cutting deck projects sideways from the mower beyond a line formed by the outer edges of the castor wheel assemblies mounted on that side when that pair of castor wheel assemblies both have the same direction of travel on the same path.

By arranging the castor wheel assemblies in this manner the cutting deck can be constructed so that its sides are the same as or less than the width as that of the wheel assemblies or narrower whilst allowing the mower to cut the grass at the extreme edge of a lawn, when the mower is manoeuvred in such a manner that the cutting deck is orientated at an angle relative to the direction of travel. The mower can be operated in the normal forward reverse manner thus providing a mower which has the benefits of having the sides of the deck located between the outer extremities of the assemblies. However, because the mower is mounted on castor wheel assemblies, it is able to be pushed along with the cutting deck at an angle to the direction of travel. Because one pair of wheels are located closer together than the other, the deck can be orientated relative to the direction of travel so that one of its edges can be located over the edge of the lawn whilst the wheels remain on the lawn.

Furthermore, when the mower is manoeuvred with the cutting deck at an angle to the direction of travel with the edge of the deck near to a wall or other object, the handle is located further away from the wall than if the mower was manoeuvred with the cutting deck orientated in the same direction as the direction of travel thus reducing the risk of the handle making contact with the wall or object.

Preferably, the four castor wheel assemblies form the comers of a trapezium. This can provide a simple symmetrical construction.

Ideally, the edge of the path swept out by the cutting blade when rotating projects sideways beyond the line formed by the outer edges of the castor wheel assemblies mounted on that side when that pair of castor wheel assemblies both have the same direction of travel on the same path.

The edge of the path swept out by the blade when rotating ideally does not project sideways from the mower further than both castor wheel assemblies mounted on that side of the mower when the mower is travelling in a forward and reverse direction.

Ideally, at least one friction reduction mechanism is mounted on at least one side of the cutting deck that will enable the side of the cutting deck to engage with an object whilst reducing the risk of being damaged. When cutting near a wall or solid object, it can protect the sides of the deck from being damaged or scratched and therefore it can enable an operator to place the sides of the deck closer to the wall or object to cut the grass near the wall or object without fear of damaging the deck or object. The friction reduction mechanism can be arranged to allow the sides of the deck to slide along the side of the wall or object to prevent damage to it. The friction reduction mechanism can comprise at least one freely rotatable roller. The roller can be a single roller or a plurality of rollers either having a common axis of rotation or parallel axis of rotation. The axis of rotation of the rollers can be, and usually will be, vertical. The roller could be a single elongate roller or a wheel or plurality of wheels. The friction reduction mechanism can, instead of or in addition to the rollers, comprise at least one freely rotatable ball mounted within a socket. The ball may freely rotate within the socket in any direction. The ball could be a plurality of small balls located along the side of the deck, or a vertical or horizontal line of balls, or a single large ball.

The friction reduction mechanism preferably projects sideways from the mower beyond a line formed by the outer edges of the castor wheel assemblies mounted on that side, when the pair of castor wheel assemblies both have the same direction of travel on the same path. Preferably, the friction reduction mechanism does not project sideways from the mower further than both castor wheel assemblies mounted on that side of the mower when the mower is manoeuvred in a forward and reverse direction.

A lawn mower according to the present invention will now be described by way of example with reference to the accompanying drawing of which:-
Figure 1 is a side view of the lawn mower; and
Figure 2 is a schematic view of the cutting deck mounted on the four castor wheel assemblies when viewed from above.

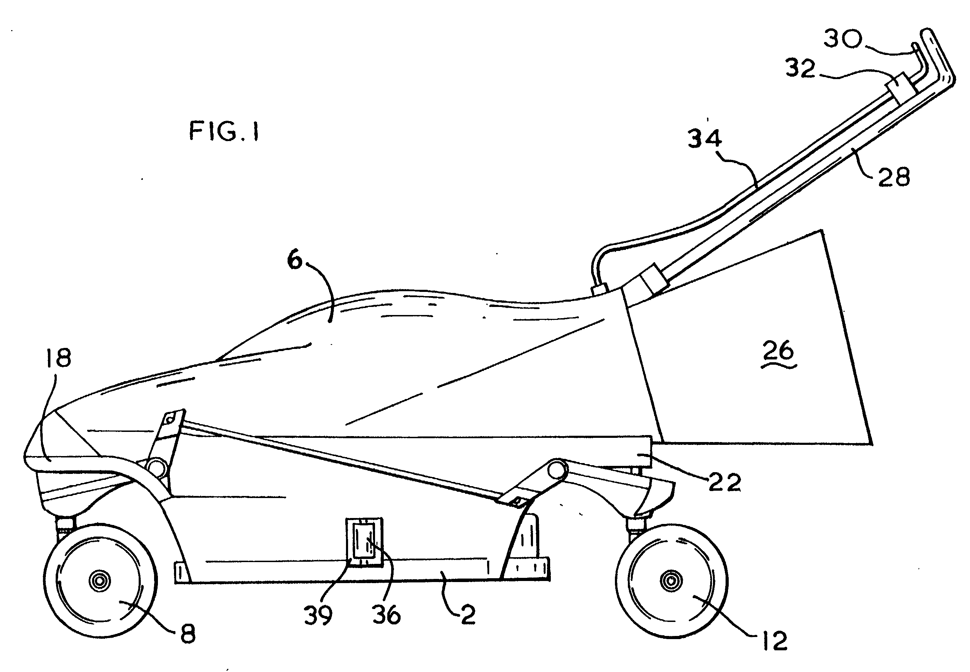

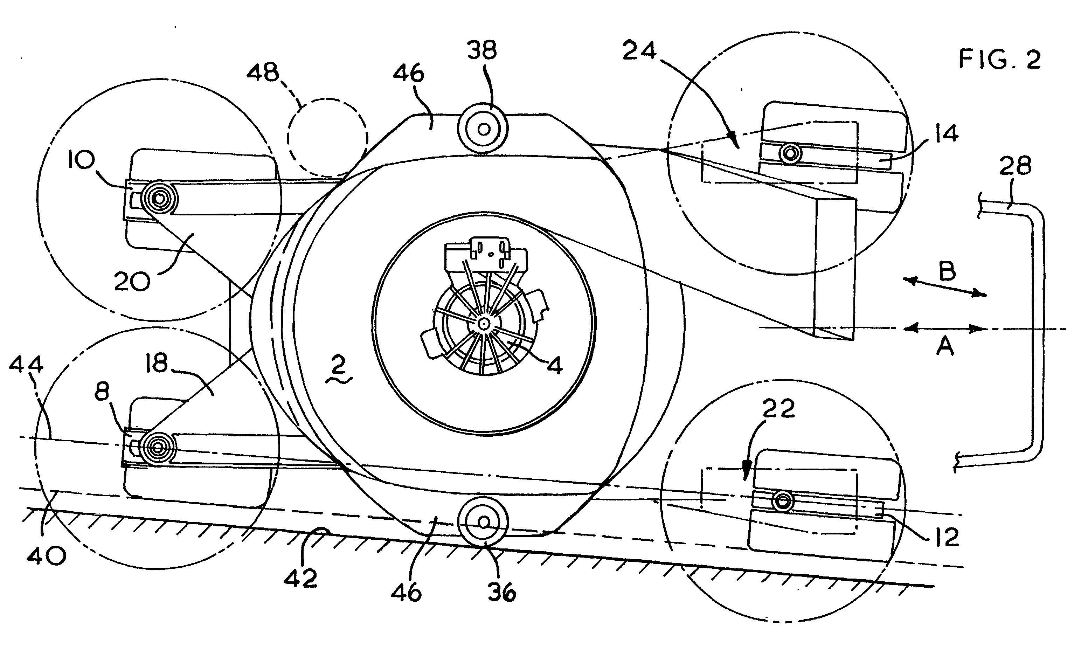

The first embodiment of the present invention will now be described. Referring to Figure 1, the lawn mower comprises a cutting deck (2) upon which is mounted a motor (4) (as shown in Figure 2). The motor (4) is powered by a battery (not shown). A hood (6) encloses the motor (4) and battery. The cutting deck (2) is mounted on four castor wheel assemblies (8, 10, 12, 14) located near to the four corners (18, 20, 22, 24) of the cutting deck (2). The motor (4) rotatingly drives a cutting blade (not shown) mounted below the cutting deck (2) on the output drive spindle of the motor (4) about a substantially vertical axis. A grass box (26) and a handle (28) are attached to the rear of the deck (2). Located on the handle (28) is a lever (30) which projects from a lever box (32) and which encloses an electric switch (not shown). An electric cable (34) runs from the lever box (32) to and then through the hood (6) into the body of the mower. An electric circuit (not shown) between the motor (4) and battery is completed by the activation of the electric switch by depression of the lever (30), thus energising the electric motor (4).

On each side of the deck (2) between the forward (8, 10) and rear (12, 14) castor wheel assemblies is located a roller (36, 38) mounted within a socket (39) on the deck (2). The rollers (36, 38) are able to freely rotate about a vertical axis. The rollers (36, 38) can be located at any point along the side of the cutting deck (2) for example towards the front castor wheel assemblies as indicated by the dashed line (48).

Referring to Figure 2, the front pair of castor wheel assemblies (8, 10) are located closer together than the rear pair (12, 14) the four castor wheel assemblies (8, 10, 12, 14) forming the four corners of a trapezium when viewed from above (as shown in Figure 2). The side edges (46) of the cutting deck (2), the two rollers (36, 38), which project sideways beyond the edge (46) of the cutting deck (2) and the edge of the path swept out by the cutting blade (not shown) as it rotates all project beyond a line (40) formed by outer edges of the front and rear castor wheel assemblies (8, 12) (shown as the two castor wheel assemblies (8, 12) closest the wall (42) in Figure 2) which have the same line of travel (44) i.e. they are travelling in the same direction on the same path (44), as opposed to the front and rear castor wheel assemblies (10, 14) located on the opposite side of the mower which are travelling in the same direction but on different paths (shown as the two castor wheel assemblies (10, 14) located furthest away from the wall (42) in Figure 2). However, the edges (46) of the deck (2), the rollers (36, 38), and the edges of the path swept out by the cutting blade when it rotates, do not project sideways beyond both castor wheel assemblies, when mower is travelling in a forward and reverse direction.

In use the mower can be pushed or pulled in a forward or reverse direction (indicated by Arrow A) in the normal manner and thus again the benefits of a mower having the sides of the cutting deck (2) located between the rear castor wheel assemblies (12). However, if the operator wishes to locate the edge of the path swept out closer to the wall (42), the operator is able to push the deck (2) at an angle (indicated by Arrow B) as shown in Figure 2. The roller (36) engages the wall (42) and prevents the side (46) of the deck (2) and the sides of the castor wheel assemblies (8, 12) from engaging with and thus being scratched or damaged by the wall (42). As the mower is pushed at an angle along the wall (42) the roller (36) freely rotates as it rolls along the wall (42).

Furthermore, as can be seen in Figure 2 (shown schematically), the handle (28) is located further away from the wall (42) when the mower is pushed along the wall (42) with the cutting deck (2) at angle to the direction of travel (Arrow B) then if the mower is pushed in a forward and reverse direction (arrow A) thus reducing the risk of the handle and an operator's hand from being damaged by the wall.

It is obvious to a person skilled in the art that the line (42) shown in Figure 2 which indicates a wall could also indicate the edge of a lawn. It is clear that by moving the mower with the deck (2) at an angle (as shown in Figure 2), the edge of the cutting deck (2) and hence the edge of path swept out by the cutting blade when it rotates can be located closer to or over the edge of the lawn whilst maintaining the four castor wheel assemblies on the lawn.

In an alternative embodiment, the rollers are replaced by a number of spherical balls (not shown) mounted in sockets (not shown) formed in the side of the cutting deck (2) and which are able to freely rotate in any direction within their sockets. The spherical balls operate in a similar manner as the rollers (36, 38), to perform the same function.

## Claims

1. A lawn mower comprising a cutting deck (2) mounted on four castor wheel assemblies (8, 10, 12, 14) each located in the region of a corner (18, 20, 22, 24) of the cutting deck (2) and wherein two castor wheel assemblies (8, 10) are located towards the front of the cutting deck (2) and the other two are located towards the rear of the cutting deck (2) and either
i) the pair of castor wheel assemblies (8, 10) located towards the front of the cutting deck (2) are located closer together than the pair of castor wheel assemblies (12, 14) located at the rear of the cutting deck (2); or
ii) the pair of castor wheel assemblies located towards the rear of the cutting deck (2) are located closer together than the pair of castor wheel assemblies located at the front of the cutting deck (2),
wherein, when the mower is manoeuvred in a forward and reverse direction, a side (46) of the cutting deck (2) does not project sideways from the mower further than both castor wheel assemblies (8, 12) on that side of the mower;
**characterised in that**, when the cutting deck is moved at an angle to the direction of travel (arrow B) the side (46) of the cutting deck (2) projects sideways from the mower beyond a line (40) formed by the outer edges of the castor wheel assemblies (8, 12) mounted on that side when that pair of castor wheel assemblies (8, 12) both have the same direction of travel on the same path.

2. A lawn mower as'claimed in claim 1 wherein the four castor wheel assemblies (8, 10, 12, 14) form the comers of a trapezium.

3. A lawn mower as claimed in either of claims 1 or 2 wherein the edge of the path swept out by the cutting blade when rotating projects beyond the line (40) formed by the outer edges of the castor wheel assemblies (8, 12) mounted on that side when that pair of castor wheel assemblies (8, 12) both have the same direction of travel on the same path.

4. A lawn mower as claimed in any one of the previous claims wherein the edge of the path swept out by the blade when rotating does not project sideways from the mower further than both castor wheel assemblies (8, 12) mounted on that side of the mower when the mower is manoeuvred in a forward and reverse direction.

5. A lawn mower as claimed in any one of the previous claims wherein at least one friction reduction mechanism (36, 38) is mounted on at least one side of the cutting deck (2).

6. A lawn mower as claimed in Claim 5 wherein the friction reduction mechanism (36, 38) comprises at least one freely rotatable roller.

7. A lawn mower as claimed in either of Claims 5 or 6 wherein the friction reduction mechanism (36, 38) comprises at least one freely rotatable ball mounted within a socket.

8. A lawn mower as claimed in any one of Claims 5 to 7 wherein the friction reduction mechanism (36, 38) projects sideways from the mower beyond a line (40) formed by the outer edges of the castor wheel assemblies (8, 12) mounted on that side of the mower when the pair of castor wheel assemblies (8, 12) both have the same direction of travel on the same path.

9. A lawn mower as claimed in any one of Claims 5 to 8 wherein the friction reduction mechanism (36, 38) does not project sideways from the mower further than both castor wheel assemblies (8, 12) mounted on that side of the mower when the mower is manoeuvred in a forward and reverse direction.

## Patentansprüche

1. Rasenmäher, mit einer Schneidplattform (2), die an vier Schwenkrollenbaugruppen (8, 10, 12, 14) montiert ist, die jeweils in dem Bereich von einer Ecke (18, 20, 22, 24) der Schneidplattform (2) angeordnet sind, wobei zwei Schwenkrollenbaugruppen (8, 10) nahe der Vorderseite der Schneidplattform (2) angeordnet sind und die anderen beiden nahe der Rückseite der Schneidplattform (2) angeordnet sind, und wobei entweder
i) das Paar von Schwenkrollenbaugruppen (8, 10), das nahe der Vorderseite der Schneidplattform (2) angeordnet ist, in geringerem Abstand zueinander angeordnet ist, als das Paar von Schwenkrollenbaugruppen (12, 14), das an der Rückseite der Schneidplattform (2) angeordnet ist, oder
ii) das Paar von Schwenkrollenbaugruppen, das nahe der Rückseite der Schneidplattform (2) angeordnet ist, in geringerem Abstand zueinander angeordnet ist, als das Paar von Schwenkrollenbaugruppen, das an der Vorderseite der Schneidplattform (2) angeordnet ist,
wobei, wenn der Mäher in einer Vorwärts- und Rückwärtsrichtung manövriert wird, eine Seite (46) der Schneidplattform (2) von dem Mäher seitwärts nicht weiter vorsteht als eine der beiden Schwenkrollenbaugruppen (8, 12) an dieser Seite des Mähers,
**dadurch gekennzeichnet, daß** dann, wenn die Schneidplattform in einem Winkel zur Fahrtrichtung (Pfeil B) bewegt wird, die Seite (46) der Schneidplattform (2) von dem Mäher seitwärts über eine Linie (40) hinaus vorsteht, die durch die Außenkanten der Schwenkrollenbaugruppen (8, 12) gebildet ist, die an dieser Seite montiert sind, wenn dieses Paar von Schwenkrollenbaugruppen (8, 12) beide die gleiche Fahrtrichtung auf dem gleichen Weg haben.

2. Rasenmäher nach Anspruch 1, bei dem die vier Schwenkrollenbaugruppen (8, 10, 12, 14) die Ecken eines Trapez bilden.

3. Rasenmäher nach Anspruch 1 oder 2, bei dem die Kante der Bahn, der durch das rotierende Schneidmesser geschnitten wird, über die Linie (40) hinaus vorsteht, die durch die Außenkanten der Schwenkrollenbaugruppen (8, 12) gebildet ist, die an dieser Seite montiert sind, wenn das Paar von Schwenkrollenbaugruppen (8, 12) beide die gleiche Fahrtrichtung auf dem gleichen Weg haben.

4. Rasenmäher nach einem der vorhergehenden Ansprüche, bei dem die Kante von der Bahn, die durch das rotierende Messer geschnitten wird, von dem Mäher seitwärts nicht weiter als die beiden Schwenkrollenbaugruppen (8, 12) vorsteht, die an dieser Seite des Mähers montiert sind, wenn der Mäher in einer Vorwärts- und Rückwärtsrichtung manövriert wird.

5. Rasenmäher nach einem der vorhergehenden Ansprüche, bei dem zumindest ein Reibungsverminderungsmechanismus (36, 38) an zumindest einer Seite der Schneidplattform (2) montiert ist.

6. Rasenmäher nach Anspruch 5, bei dem der Reibungsverminderungsmechanismus (36, 38) zumindest eine frei drehbare Walze aufweist.

7. Rasenmäher nach einem der Ansprüche 5 oder 6, bei dem der Reibungsverminderungsmechanismus (36, 38) zumindest eine frei drehbare Kugel aufweist, die in einer Fassung montiert ist.

8. Rasenmäher nach einem der Ansprüche 5 bis 7, bei dem der Reibungsverminderungsmechanismus (36, 38) von dem Mäher seitwärts über eine Linie (40) hinaus vorsteht, die durch die Außenkanten der Schwenkrollenbaugruppen (8, 12) gebildet ist, die an dieser Seite des Mähers montiert sind, wenn das Paar von Schwenkrollenbaugruppen (8, 12) beide die gleiche Fahrtrichtung auf dem gleichen Weg haben.

9. Rasenmäher nach einem der Ansprüche 5 bis 8, bei dem der Reibungsverminderungsmechanismus (36, 38) von dem Mäher seitwärts nicht weiter als eine der beiden Schwenkrollenbaugruppen (8, 12) vorsteht, die an dieser Seite des Mähers montiert sind, wenn der Mäher in eine Vorwärts- und Rückwärtsrichtung manövriert wird.

## Revendications

1. Tondeuse à gazon comprenant un capot (2) d'unité de coupe monté sur quatre ensembles de roues (8, 10, 12, 14) situés chacun dans la zone d'un coin (18, 20, 22, 24) du capot (2) de l'unité de coupe, et dans laquelle deux ensembles de zones (8, 10) sont situés vers l'avant du capot (2) de l'unité de coupe et les deux autres sont situés vers l'arrière du capot (2) de l'unité de coupe et
i) soit la paire d'ensembles de roués (8, 10) situés vers l'avant du capot (2) de l'unité de coupe sont plus proches l'un de l'autre que les ensembles de la paire d'ensembles de roues (12, 14) situés à l'arrière du capot (2) de l'unité de coupe ;
ii) soit les ensembles de roues de la paire d'ensembles de roues situés sur l'arrière du capot (2) de l'unité de coupe sont plus proches l'un de l'autre que les ensembles de roues de la paire d'ensembles de roues situés en avant du capot (2) de l'unité de coupe,
dans laquelle, lorsqu'on manoeuvre la tondeuse dans la direction de marche avant et dans la direction de marche arrière, un côté (46) du capot (2) de l'unité de coupe ne fait pas saillie latéralement à partir de la tondeuse au-delà de l'un des deux ensembles de roues (8, 12) sur ce côté de la tondeuse ;
**caractérisée en ce que**, lorsque le capot de l'unité de coupe est déplacé sur un angle dans la direction de déplacement (flèche B), le côté (46) du capot (2) de l'unité de coupe fait saillie latéralement à partir de la tondeuse au-delà d'une droite (40) formée par les bords extérieurs des ensembles de roues (8, 12) montés sur ce côté lorsque les ensembles de roues de la paire d'ensembles de roues (8,12) possèdent la même direction de déplacement sur le même trajet.

2. Tondeuse à gazon selon la revendication 1, dans laquelle les quatre ensembles de roues (8, 10, 12, 14) forment les sommets d'un trapèze.

3. Tondeuse à gazon selon l'une des revendications 1 ou 2, dans laquelle le bord du trajet balayé par la lame de coupe lors de sa rotation fait saillie au-delà de la droite (40) formée par les bords extérieurs des ensembles de roues (8, 12) montés sur ce côté lorsque les ensembles de roues de cette paire d'ensembles de roues (8, 12) possèdent la même direction de déplacement sur le même trajet.

4. Tondeuse à gazon selon l'une quelconque des revendications précédentes, dans laquelle le bord du trajet balayé par la lame lors de sa rotation ne fait pas saillie latéralement par rapport à la tondeuse à gazon au-delà des deux ensembles de roues (8, 12) montés sur ce côté de la tondeuse lorsqu'on manoeuvre la tondeuse dans une direction de marche avant et dans une direction de marche arrière.

5. Tondeuse à gazon selon l'une quelconque des revendications précédentes, dans laquelle au moins un mécanisme (36, 38) de réduction du frottement est monté sur au moins un côté du capot (2) de l'unité de coupe.

6. Tondeuse à gazon selon la revendication 5, dans laquelle le mécanisme (36, 38) de réduction du frottement comprend au moins un rouleau pouvant tourner librement.

7. Tondeuse à gazon selon l'une des revendications 5 ou 6, dans laquelle le mécanisme (36, 38) de réduction du frottement comprend au moins une bille pouvant tourner librement, montée dans une douille.

8. Tondeuse à gazon selon l'une quelconque des revendications 5 à 7, dans laquelle le mécanisme (36, 38) de réduction du frottement fait saillie latéralement à partir de la tondeuse au-delà d'une droite (40) formée par les bords extérieurs des ensembles de roues (8, 12) montés sur ce côté de la tondeuse lorsque les deux ensembles de roues de la paire d'ensembles de roues (8, 12) possèdent tous deux la même direction de déplacement sur le même trajet.

9. Tondeuse à gazon selon l'une quelconque des revendications 5 à 8, dans laquelle le mécanisme (36, 38) de réduction du frottement ne fait pas saillie latéralement à partir de la tondeuse au-delà des deux ensembles de roues (8, 12) montés sur ce côté de la tondeuse lorsqu'on manoeuvre la tondeuse dans le sens de la marche avant et de la marche arrière.
